# EUROPÄISCHE PATENTSCHRIFT

(11) **EP 2 892 786 B1**
(45) Veröffentlichungstag und Bekanntmachung des Hinweises auf die Patenterteilung: **20.01.2021**
(21) Anmeldenummer: 13759211.9
(22) Anmeldetag: 09.09.2013
(51) Int. Cl.: B61L 3/00, B61L 25/02, B61L 27/04, B60T 8/17, B60T 13/66, B60T 17/22

(54) **VERFAHREN ZUR KALKULATION EINER FAHREMPFEHLUNG EINES SCHIENENFAHRZEUGS, ASSISTENZSYSTEM EINES SCHIENENFAHRZEUGS UND SCHIENENFAHRZEUG**
METHOD FOR CALCULATING A DRIVING RECOMMENDATION FOR A RAIL VEHICLE, ASSISTANCE SYSTEM OF A RAIL VEHICLE AND RAIL VEHICLE
PROCÉDÉ DE CALCUL D'UNE RECOMMANDATION DE CONDUITE D'UN VÉHICULE FERROVIAIRE, SYSTÈME D'AIDE À LA CONDUITE D'UN VÉHICULE FERROVIAIRE ET VÉHICULE FERROVIAIRE

(30) Priorität: 10.09.2012 DE 102012108395
(43) Veröffentlichungstag der Anmeldung: 15.07.2015
(73) Patentinhaber: KNORR-BREMSE Systeme für Schienenfahrzeuge GmbH, 80809 München (DE)
(72) Erfinder: WALTER, Manfred, 85375 Neufahrn (DE)
(86) Internationale Anmeldenummer: PCT/EP2013/068551
(87) Internationale Veröffentlichungsnummer: WO 2014/037549

(56) Entgegenhaltungen:
- DE-A1-102009 023 704
- US-A1- 2009 255 329
- US-A1- 2010 070 116
- US-B1- 6 219 595
- WINTER J ET AL: "Fahrerassistenz-System", SIGNAL + DRAHT, TELZLAFF VERLAG GMBH. DARMSTADT, DE, Bd. 101, Nr. 10, 1. Oktober 2009 (2009-10-01), Seiten 6-10,12, XP001548183, ISSN: 0037-4997

## Beschreibung

Die vorliegende Erfindung betrifft ein Verfahren zu Kalkulation einer Fahrempfehlung eines Schienenfahrzeugs, insbesondere eines Triebzugs oder einer Lokomotive, mit einem in dem Schienenfahrzeug eingebauten Assistenzsystem. Die Erfindung betrifft desweiteren ein Assistenzsystem sowie ein Schienenfahrzeug.

Im Schienenfahrzeugverkehr sind seit einigen Jahren Kalkulationsverfahren für Fahrempfehlungen bekannt, welche in Berechnungseinheiten eines Assistenzsystems, insbesondere eines Fahrerassistenzsystems, durchgeführt werden. Bei diesen Verfahren, beispielsweise bekannt aus der DE 10 2009 023 704 A1, wird mittels eines Algorithmus eine Fahrempfehlung berechnet, die dem Triebfahrzeugführer eine Empfehlung gibt, wie das Schienenfahrzeug zu steuern ist, um eine oder mehrere Zielgrößen zu optimieren. Als Zielgrößen kommen beispielsweise eine pünktlichen Ankunft am Zielort, der Energieverbrauch auf der zu fahrenden Strecke oder auch die im Gelände während der Fahrt auftretenden Zuglängskräfte in Frage. Als Eingangsgrößen für das Kalkulationsverfahren dienen die physikalischen Eigenschaften des Schienenfahrzeugs sowie ggf. an dieses angehängte Wagen, die zu befahrende Strecke, der Fahrplan sowie andere betriebliche Vorschriften, wie beispielsweise Geschwindigkeitsbeschränkungen.

Aus der US 2009/0255329 A1 ist ein System und ein Verfahren zur Bestimmung der Effektivität einer Bremsanordnung eines Zuges während des Zugbetriebes bekannt, bei dem aus in einer Datenbank abgespeicherten bremsenspezifischen Daten sowie zugspezifischen Daten Bremsschuheffektivitätsdaten bestimmt werden, um daraus die Fähigkeit der Bremsanordnung des Zuges hinsichtlich der Abbremsung des Zuges auf einen vorbestimmten Wert zu ermitteln.

Diese Verfahren haben sich in der Praxis durchaus bewährt.

Aufgabe der vorliegenden Erfindung ist es, ein Verfahren zur Kalkulation einer Fahrempfehlung mit Hilfe eines in einem Schienenfahrzeug integrierten Assistenzsystems bereit zu stellen, mit dem insbesondere die Fahrweise hinsichtlich des Einsatzes der Bremsen des Schienenfahrzeugs weiter verbessert werden kann.

Diese Aufgabe wird gelöst durch ein Verfahren zur Kalkulation einer Fahrempfehlung mit den Merkmalen des Anspruchs 1, sowie durch ein Assistenzsystem mit den Merkmalen des Anspruchs 13 und durch ein Schienenfahrzeug mit den Merkmalen des Anspruchs 14.

Das erfindungsgemäße Verfahren, das mit Hilfe eines in dem Schienenfahrzeug integrierten Assistenzsystems ausgeführt wird, weist dabei die folgenden Verfahrensschritte auf:
- Erfassen der aktuellen Position des Schienenfahrzeugs,
- Erfassen der aktuellen Geschwindigkeit des Schienenfahrzeugs,
- Erfassen momentaner Zustandsparameter der Bremskomponenten des Schienenfahrzeugs,
- Vergleich der Zustandsparameter von Bremskomponenten mit im Datenspeicher abgespeicherten Sollbereichen der Zustandsparameter der Bremskomponenten,
- Berechnen der aktuell verfügbaren Bremskraft der Bremskomponenten auf Basis des Vergleichs der Zustandsparameter der Bremskomponenten,
- Aktualisieren der Fahrempfehlung während der Fahrt unter Berücksichtigung der aktuellen Position und Geschwindigkeit des Schienenfahrzeugs und der aus dem Vergleich der Zustandsparameter der Bremskomponenten erhaltenen aktuell verfügbaren Bremskraft der Bremskomponenten.

Mit dem erfindungsgemäßen Verfahren ist eine deutliche Verbesserung bislang bekannter Kalkulationsverfahren ermöglicht, dadurch, dass auch während der Fahrt momentane Zustandsparameter der Bremskomponenten des Schienenfahrzeugs erfasst und in die Berechnung für die Fahrempfehlung eingehen. Dadurch kann als weitere Zielgrößen eine schonende Fahrweise in Bezug auf die Bremskomponenten des Schienenfahrzeugs berechnet werden. Außerdem ist dadurch ermöglicht, dass die Stärke einer Bremsung der momentan verfügbaren Bremskraft angepasst werden kann, so dass dadurch sicherheitskritische und/oder verschleißintensive Überlastungen der Bremskomponenten des Schienenfahrzeugs vermieden werden können.

Vorteilhafte Ausführungsvarianten der Erfindung sind Gegenstand der Unteransprüche.

Gemäß einer vorteilhaften Ausführungsvariante wird insbesondere bei Schienenfahrzeugen, wo anstelle des Triebfahrzeugführers Fahrerassistenzsysteme direkt die Steuerung des Schienenfahrzeugs übernehmen, die aktuelle Fahrempfehlung von der Berechnungseinheit des Assistenzsystems an eine Steuereinheit des Schienenfahrzeugs übermittelt, die dann selbsttätig beispielsweise die aktuelle Geschwindigkeit an die aktuell verfügbare Bremskraft des Bremskomponenten des Schienenfahrzeugs derart anpasst, dass eine Abbremsung des Schienenfahrzeugs ohne erhöhtes Risiko einer Beschädigung der Bremskomponenten erfolgen kann.

Nach einer Ausführungsvariante der Erfindung wird bei der Erfassung momentaner Zustandsparameter der Bremskomponenten des Schienenfahrzeugs die aktuelle Temperatur der Reibbelege und der Bremsscheibe oder der Räder des Schienenfahrzeugs, an denen die Reibbelege bei einem Bremsvorgang anliegen, gemessen.

Nach einer weiteren Ausführungsvariante der Erfindung wird diese Temperatur nicht gemessen, sondern aus den physikalischen Eigenschaften der Bremskomponenten sowie aus dem Wärmeeintrag der zuvor erfolgten Bremsungen numerisch ermittelt.

Die Temperatur dieser Bremskomponenten ist als Kenngröße verwendbar, da die Verschleißeigenschaften dieser Bremskomponenten temperaturabhängig sind.

Beim verschleißbehafteten Kontakt des Reibbelags oder eines Bremsklotzes sowie der Bremsscheibe oder dem Rad des Schienenfahrzeugs, an dem der Bremsklotz oder Reibbelag bei einer Bremsung anliegt, Bewegungsenergie in Wärme umgewandelt wird. Aufgrund der Materialeigenschaften der Reibbeläge und/oder Bremsscheiben oder Räder bedingen die höheren Temperaturen in den Bremskomponenten auch einen höheren Verschleiß in den jeweiligen Bremskomponenten.

Neben dem bei einem Bremsvorgang entstehenden Abrieb kann es bei Überhitzung auch zu einem Totalausfall von Bremskomponenten durch Rissbildung kommen. Die Temperaturüberwachung der Bremskomponenten schafft hier Abhilfe, in dem die kalkulierte Fahrempfehlung den aktuellen Temperaturen der Bremskomponenten Rechnung trägt, was beispielsweise in der Empfehlung einer entsprechend verlangsamten Fahrgeschwindigkeit oder eines frühzeitigen Ausrollens des Schienenfahrzeugs resultieren kann.

Insbesondere ein kontinuierliches Erfassen der momentanen Zustandsparameter der Bremskomponenten des Schienenfahrzeugs führt so zu einer stets entsprechend angepassten Fahrempfehlung.

In einer Ausführungsvariante werden auch momentane Zustandsparameter weiterer Komponenten des Schienenfahrzeugs erfasst, mit Sollwerten verglichen und zur Berechnung der Fahrempfehlung herangezogen.

Gemäß einer weiteren Ausführungsvariante der Erfindung werden die im Datenspeicher der Berechnungseinheit eingespeicherten Daten über einen an der Berechnungseinheit vorgesehenen Datenschnittstelle aktualisiert. Diese Datenschnittstelle ist dabei bevorzugt als drahtlose Kommunikationsschnittstelle ausgebildet, über die kontinuierliche oder in vorbestimmten Zeitintervallen, die im Datenspeicher der Berechnungseinheit gespeicherten Daten aktualisiert werden.

Dies ermöglicht auch, dass beispielsweise von einer zentralen Leitstelle mitgeteilte Informationen, wie beispielsweise Fahrplanänderungen, Streckensperrungen oder den Abstand weiterer Schienenfahrzeuge auf der zu befahrenden Strecke in die Kalkulation der Fahrempfehlung stets aktuell erfasst werden.

Nachfolgend werden bevorzugte Ausführungsvarianten des Erfinders gemäß des Verfahrens, des Assistenzsystems für ein Schienenfahrzeug anhand der Figuren näher erläutert. Es zeigen:
- Fig. 1: eine schematische Darstellung eines Schienenfahrzeugs mit darin eingebautes Assistenzsystem und
- Fig. 2: ein schematisches Ablaufdiagramm zur Darstellung einer Ausführungsvariante des erfindungsgemäßen Verfahrens.

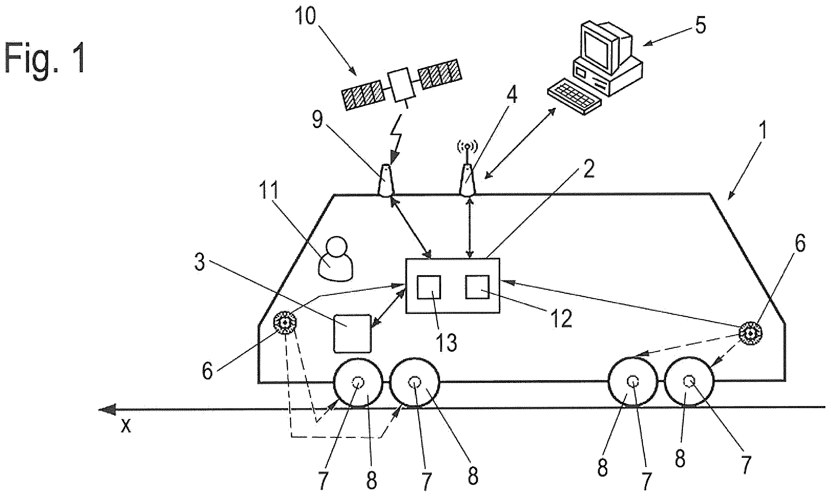

In Fig. 1 ist mit dem Bezugszeichen 1 insgesamt ein Schienenfahrzeug bezeichnet, das ein Assistenzsystem 2 aufweist. Das Assistenzsystem 2 ist dabei insbesondere als sog. Fahrerassistenzsystem ausgebildet, mit einem Bildschirm, der vorzugsweise Bestandteil eines Führerstandes eines Triebzugs oder Lokomotive ausgebildeten Schienenfahrzeugs ist. Dieser Bildschirm ist an eine Berechnungseinheit 12 des Assistenzsystems 2 angeschlossen, sodass dem Triebfahrzeugführer 11 auf diesem Bildschirm die in dem Assistenzsystem 2 berechneten Fahrempfehlungen, beispielsweise eine Geschwindigkeitsempfehlung und/oder eine Empfehlung für eine Bremshebel- oder Traktionshebelposition angezeigt werden.

Das Assistenzsystem 2 weist desweiteren einen Datenspeicher 13 auf, der vorzugsweise insbesondere Fahrplan- und Streckeninformationen der zu befahrenden Strecke, physikalische Eigenschaften des Schienenfahrzeugs 1 und ggf. an diesen angehängte Wagen aufweist. Zu diesen physikalischen Eigenschaften des Schienenfahrzeugs 1 zählen dabei insbesondere die Masse des Schienenfahrzeugs bzw. der angehängten Wagen und insbesondere auch die Charakteristik von Antrieb und an den Fahrzeugachsen 7 bzw. der angeordneten Räder 8 angeordneten Bremskomponenten. Die oben genannten Daten werden dabei vorzugsweise vor dem Antritt der Fahrt des Schienenfahrzeugs in den Datenspeicher 13 eingegeben.

Um auf Änderungen, insbesondere des Fahrplans oder Änderungen an der zu befahrenden Fahrtstrecke während der Fahrt des Schienenfahrzeugs 1 aufnehmen zu können, ist der Datenspeicher 13 vorzugsweise über eine Datenschnittstelle 4, die vorzugsweise eine drahtlose Verbindung mit einer zentralen Leitstelle 5 bereitstellt, auch während der Fahrt aktualisierbar.

Denkbar sind auch alternative oder zusätzliche Datenschnittstellen, über die beispielsweise Speichersticks oder andere Speichermedien direkt mit dem Datenspeicher 13 verbunden werden können und so Daten auf den Datenspeicher 13 aufspielbar sind oder von diesem geladen werden können.

Zur Erfassung der aktuellen Position des Schienenfahrzeugs 1 ist das Assistenzsystem 2 bevorzugt mit einer weiteren Datenschnittstelle 9 ausgestattet, die eine drahtlose Verbindung mit einem Satellitennavigationssystem ermöglicht, sodass jederzeit eine exakte Positionsbestimmung des Schienenfahrzeugs 1 auf der Fahrstrecke gegeben ist.

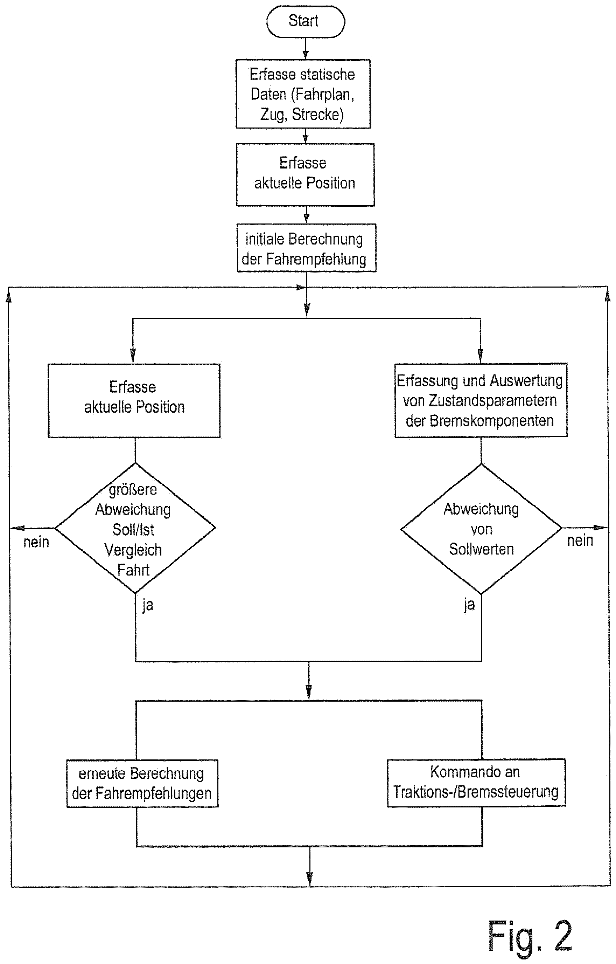

Wie in dem in Fig. 2 gezeigten schematischen Ablaufdiagramm gezeigt ist, werden zur Kalkulation einer Fahrempfehlung für die durch das Schienenfahrzeug 1 zu befahrende Fahrstrecke unter Berücksichtigung der vor Fahrtantritt in den Datenspeicher 13 des Assistenzsystems 2 geladenen Daten zunächst aktuelle Position, die aktuelle Geschwindigkeit sowie die momentanen Zustandsparameter der Bremskomponenten des Schienenfahrzeugs 1 erfasst.

Die Erfassung der momentanen Zustandsparameter mit den Bremskomponenten des Schienenfahrzeugs 1 umfasst dabei insbesondere eine Erfassung der aktuellen Temperatur der Reibbeläge oder Bremsklötze und der Bremsscheiben oder, im Fall, dass die Reibbeläge oder Bremsklötze direkt an den Rädern 8 des Schienenfahrzeugs 1 eingreifen, die Räder 8 des Schienenfahrzeugs 1.

Die Temperaturerfassung erfolgt dabei in einer Ausführungsvariante des erfindungsgemäßen Verfahrens über eine Messung der abgegebenen Wärmestrahlung, beispielsweise über ein Infrarotmessgerät. Andere Ausführungen eines solchen Temperaturmessgerätes sind ebenfalls denkbar. Die Temperaturmessgeräte 6 sind dabei drahtgebunden oder auch drahtlos mit der Berechnungseinheit 12 des Assistenzsystems 2 verbunden.

In einer anderen Ausführungsvariante des erfindungsgemäßen Verfahrens erfolgt die Temperaturerfassung über eine numerische Ermittlung, basierend auf den physikalischen Eigenschaften der Bremskomponenten sowie aus dem Wärmeeintrag der zuvor erfolgten Bremsungen.

Die so erfassten Temperaturdaten werden in einem weiteren Verfahrensschritt mit in dem Datenspeicher 13 gespeicherten Sollbereichen der Zustandsparameter der Bremskomponenten in der Berechnungseinheit 12 verglichen.

Aus diesem Vergleich wird in einem anschließenden Verfahrensschritt eine aktuell verfügbare Bremskraft der Bremskomponenten berechnet. Diese aktuell verfügbare Bremskraft geht sodann als ausschließliche oder als eine der zu optimierenden Zielgrößen in eine Berechnung einer aktuellen Fahrempfehlung unter weiterer Berücksichtigung der aktuellen Position und Geschwindigkeit des Schienenfahrzeugs ein.

Sofern es sich bei dem Schienenfahrzeug 1 um ein Triebfahrzeug handelt, das ohne Triebfahrzeugführer 11 auskommt, wird die kalkulierte Fahrempfehlung in einem nächsten Verfahrensschritt von der Berechnungseinheit 12 des Assistenzsystems 2 direkt an einer Steuereinheit 3 des Schienenfahrzeugs 1 übermittelt, sodass aus der aktualisierten Fahrempfehlung heraus direkt eine Ansteuerung des Schienenfahrzeugs 1 erfolgt, die beispielsweise in einer Drosselung der aktuellen Fahrgeschwindigkeit besteht.

Bei der Berechnung der aktuell verfügbaren Bremskraft der Bremskomponenten werden insbesondere die Temperaturabhängigkeit des Verschleißes der Reibbeläge oder der Bremsscheiben oder der Räder 8 des Schienenfahrzeugs 1 berücksichtigt, da je nach dem Material insbesondere der Reibbeläge die Temperaturabhängigkeit des Verschleißes unterschiedlich sind.

Dadurch ist ermöglicht, dass beispielsweise nach einer längeren Gefällestrecke der Fahrstrecke, bei der eine oder mehrere der Bremskomponenten durch einen lange andauernden Bremsvorgang einer großen Hitzebelastung ausgesetzt sind, im anschließenden Streckenbereich eine gegenüber einer vorgegebenen Sollgeschwindigkeit reduzierte Geschwindigkeit als Fahrempfehlung ausgegeben wird, da gegebenenfalls eine Teilanzahl der Bremskomponenten sich so stark erhitzt haben, dass bis zum Wiedererlangen der mit diesen Bremskomponenten vorgegebenen Sollbremskraft eine vorbestimmte Abkühlzeit oder alternativ eine reduzierte Bremskraft dieser Bremskomponenten berücksichtigt werden kann, sodass bei der diese Faktoren berücksichtigenden Fahrempfehlung einer reduzierten Fahrgeschwindigkeit eine Beschädigung der Bremskomponenten bei einem anschließenden Bremsvorgang verhinderbar ist.

Die Erfassung der momentanen Zustandsparameter der Bremskomponenten des Schienenfahrzeugs 1 erfolgt vorzugsweise kontinuierlich, beispielsweise im Sekundentakt. Denkbar ist auch eine Erfassung der momentanen Zustandsparameter der Bremskomponenten in Folge vorbestimmter Ereignisse, beispielsweise während und während einer vorbestimmten Zeitspanne nach einem erfolgten Bremsvorgang.

Ebenso erfolgt die Weiterleitung der erfassten momentanen Zustandsparameter der Bremskomponenten des Schienenfahrzeugs 1 an die Berechnungseinheit 12 des Assistenzsystems 2 vorzugsweise kontinuierlich. Denkbar ist auch hier eine Weiterleitung auf Anforderung, gesteuert durch das Assistenzsystem 2.

Ist das Assistenzsystem 2 mit den Bremskomponenten über eine oder mehrere Schnittstellen verbunden, so kann damit die Betriebsbereitschaft der Bremskomponenten überprüft werden, so dass insbesondere eine eventuelle Störung in einer oder mehrerer der Bremskomponenten ebenso zu einer veränderten Fahr- und Bremsempfehlung führen kann wie eine momentane ungünstige, d.h. die Bremskraft mindernde Temperatur.

Neben der Erfassung der Zustandsparameter am Bremskomponenten ist es auch denkbar, weitere Komponenten des Schienenfahrzeugs kontinuierlich oder in Folge vorbestimmter Ereignisse zu erfassen, diese mit den im Datenspeicher 13 abgespeicherten Sollwerten zu vergleichen und zur Berechnung der Fahrempfehlung heranzuziehen.

Dazu gehört insbesondere ein Vergleich der aktuellen Geschwindigkeit des Schienenfahrzeugs 1 nach Erfassen der aktuellen Position des Schienenfahrzeugs 1 mit einer vor Fahrtantritt berechneten Sollgeschwindigkeit, die im Datenspeicher 13 als Sollgeschwindigkeitsprofil für den aktuell gefahrenen Streckenabschnitt abgespeichert ist.

Wichtig ist, dass mit dem oben beschriebenen Verfahren bzw. ein Assistenzsystem und einem mit einem solchen Assistenzsystem ausgestatteten Schienenfahrzeug jederzeit eine momentane Verfügbarkeit sämtlicher Bremskomponenten des Schienenfahrzeugs ermöglicht ist, die von dem Assistenzsystem erfasst und mit dem oben beschriebenen Verfahren in die Berechnung einer Fahrempfehlung eingeht, sodass sich jeder Bremsvorgangs des Schienenfahrzeugs an die tatsächlich verfügbare Bremskraft anpassen lässt, wodurch sich Überlastungen der Bremskomponenten wirksam vermeiden lassen.

### Bezugszeichenliste

- 1: Schienenfahrzeug
- 2: Assistenzsystem
- 3: Steuereinheit
- 4: Datenschnittstelle
- 5: Zentrale Leitstelle
- 6: Temperaturmessgerät
- 7: Fahrzeugachsen
- 8: Räder
- 9: Datenschnittstelle
- 11: Triebfahrzeugführer
- 12: Berechnungseinheit
- 13: Datenspeicher

## Patentansprüche

1. Verfahren zur Kalkulation einer Fahrempfehlung eines Schienenfahrzeugs (1), insbesondere eines Triebzugs oder einer Lokomotive, mit einem in dem Schienenfahrzeug (1) eingebauten Assistenzsystem (2) mit einer Berechnungseinheit (12) und einem Datenspeicher (13), in dem Fahrplan- und Streckeninformationen der zu befahrenden Strecke, physikalische Eigenschaften des Schienenfahrzeuges (1) und ggfs. an dieses angehängte Wagen gespeichert sind, aufweisend die Verfahrensschritte:
- Erfassen der aktuellen Position des Schienenfahrzeugs (1),
- Erfassen der aktuellen Geschwindigkeit des Schienenfahrzeugs (1), **gekennzeichnet durch** die weiteren Verfahrensschritte:
- Erfassen momentaner Zustandsparameter der Bremskomponenten des Schienenfahrzeugs (1),
- Vergleich der Zustandsparameter von Bremskomponenten mit im Datenspeicher (13) abgespeicherten Sollbereichen der Zustandsparameter der Bremskomponenten,
- Berechnen der aktuell verfügbaren Bremskraft der Bremskomponenten auf Basis des Vergleichs der Zustandsparameter der Bremskomponenten,
- Aktualisieren der Fahrempfehlung während der Fahrt unter Berücksichtigung der aktuellen Position und Geschwindigkeit des Schienenfahrzeugs (1) und der aus dem Vergleich der Zustandsparameter der Bremskomponenten erhaltenen aktuell verfügbaren Bremskraft der Bremskomponenten.

2. Verfahren nach Anspruch 1, wobei die aktualisierte Fahrempfehlung von der Berechnungseinheit (12) an eine Steuereinheit (3) des Schienenfahrzeugs (1) übermittelt wird.

3. Verfahren nach Anspruch 1 oder 2, wobei bei der Erfassung momentaner Zustandsparameter der Bremskomponenten des Schienenfahrzeugs (1) die aktuelle Temperatur der Reibbeläge und der Bremsscheiben oder der Räder (8) des Schienenfahrzeugs (1), an denen die Reibbeläge bei einem Bremsvorgang anliegen, gemessen wird.

4. Verfahren nach Anspruch 1 oder 2, wobei bei der Erfassung momentaner Zustandsparameter der Bremskomponenten des Schienenfahrzeugs (1) die aktuelle Temperatur der Reibbeläge und der Bremsscheiben oder der Räder (8) des Schienenfahrzeugs (1), an denen die Reibbeläge bei einem Bremsvorgang anliegen, aus den physikalischen Eigenschaften der Bremskomponenten sowie aus dem Wärmeeintrag von zuvor erfolgten Bremsvorgängen numerisch ermittelt wird.

5. Verfahren nach Anspruch 3 oder 4, wobei bei der Berechnung der aktuell verfügbaren Bremskraft der Bremskomponenten die Temperaturabhängigkeit des Verschleißes der Reibbeläge und/oder Bremsscheiben oder der Räder (8) des Schienenfahrzeugs (1) berücksichtigt wird.

6. Verfahren nach einem der vorstehenden Ansprüche, wobei bei der Erfassung momentaner Zustandsparameter der Bremskomponenten des Schienenfahrzeugs (1) die Betriebsbereitschaft einer oder mehrerer der Bremskomponenten berücksichtigt wird.

7. Verfahren nach einem der vorstehenden Ansprüche, wobei das Erfassen momentaner Zustandsparameter der Bremskomponenten des Schienenfahrzeugs (1) kontinuierlich erfolgt.

8. Verfahren nach Anspruch 7, wobei die Weiterleitung der erfassten momentanen Zustandsparameter der Bremskomponenten des Schienenfahrzeugs (1) an die Berechnungseinheit (12) des Assistenzsystems (2) kontinuierlich erfolgt.

9. Verfahren nach einem der vorstehenden Ansprüche, wobei momentane Zustandsparameter weiterer Komponenten des Schienenfahrzeugs (1) erfasst, mit Sollwerten verglichen und zur Berechnung einer Fahrempfehlung herangezogen werden.

10. Verfahren nach einem der vorstehenden Ansprüche, wobei nach der Erfassung der aktuellen Position des Schienenfahrzeugs (1) ein Vergleich der aktuellen Geschwindigkeit des Schienenfahrzeugs (1) mit einer vor Fahrtantritt berechneten Sollgeschwindigkeit, die im Datenspeicher (13) als Sollgeschwindigkeitsprofil für den aktuell befahrenen Streckenabschnitt abgespeichert ist, durchgeführt wird.

11. Verfahren nach einem der vorstehenden Ansprüche, wobei die im Datenspeicher (13) gespeicherten Daten über eine Datenschnittstelle (4) aktualisiert werden.

12. Verfahren nach Anspruch 11, wobei Datenschnittstelle (4) als drahtlose Kommunikationsschnittstelle ausgebildet ist, über die kontinuierlich oder in vorbestimmten Zeitintervallen die im Datenspeicher (13) der Berechnungseinheit (12) gespeicherten Daten aktualisiert werden.

13. Assistenzsystem (2) eines Schienenfahrzeugs (1), insbesondere Fahrerassistenzsystem eines Triebzugs oder einer Lokomotive, aufweisend einen Datenspeicher (13) zur Speicherung von Fahrplan- und Streckeninformationen der zu befahrenden Strecke, physikalischen Eigenschaften des Schienenfahrzeuges (1) und ggfs. an dieses angehängte Wagen, eine Berechnungseinheit (12), mit der eine Fahrempfehlung kalkuliert wird, einen Anschluss an mindestens eine im Schienenfahrzeug (1) installierte Messapparatur zur Erfassung aktueller Parameter von Schienenfahrzeugs(1) und ggfs. an dieses angehängte Wagen, **dadurch gekennzeichnet, dass** die Berechnungseinheit (12) an zumindest eine Temperaturmessapparatur (6) zur Erfassung momentaner Temperaturen der Bremskomponenten angeschlossen ist, wobei die Berechnungseinheit (12) zur Durchführung eines Verfahrens gemäß einem der vorstehenden Ansprüche 1 bis 3 und 5 bis 12 ausgelegt ist.

14. Schienenfahrzeug (1), insbesondere Triebzug oder Lokomotive, aufweisend mehrere Fahrzeugachsen (7) mit Rädern (8) und jeweiligen Bremskomponenten sowie ein Assistenzsystem (2), insbesondere ein Fahrerassistenzsystem, zur Berechnung einer Fahrempfehlung oder zur Steuerung des Schienenfahrzeug (1) **dadurch gekennzeichnet, dass** das Assistenzsystem (2) gemäß Anspruch 13 ausgebildet ist.

## Claims

1. A method for calculating a driving recommendation for a rail vehicle (1), in particular for a multiple-unit train or a locomotive, having an assistance system (2) that is fitted in the rail vehicle (1) and comprises a calculation unit (12) and a data memory (13), in which are stored timetable information and route information for the route to be travelled and physical properties of the rail vehicle (1) and, where appropriate, of wagons coupled to it, and comprising the following steps:
- the detection of the current position of the rail vehicle (1),
- the detection of the current speed of the rail vehicle (1),
**characterised by** the following additional steps:
- the detection of status parameters of the braking components of the rail vehicle (1) at a given moment in time,
- the comparison of these braking component status parameters with setpoint ranges for the braking component status parameters stored in the data memory (13),
- the calculation the currently available braking force of the braking components on the basis of the comparison of the braking component status parameters,
- the updating of the driving recommendation during travel taking into account the current position and speed of the rail vehicle (1) and the currently available braking force of the braking components obtained from the comparison of the braking component status parameters.

2. A method according to claim 1, the updated driving recommendation being transmitted by the calculation unit (12) to a control unit (3) of the rail vehicle (1).

3. A method according to claim 1 or 2, the current temperature of the friction linings and the brake discs or wheels (8) of the rail vehicle (1) on which the friction linings bear during braking being measured during the detection of the status parameters of the braking components of the rail vehicle (1) at a given moment in time.

4. A method according to claim 1 or 2, the current temperature of the friction linings and the brake discs or wheels (8) of the rail vehicle (1) on which the friction linings bear during braking being determined numerically from the physical properties of the braking components and from the heat input of previous braking operations during the detection of the status parameters of the braking components of the rail vehicle (1) at a given moment in time.

5. A method according to claim 3 or 4, the temperature-dependence of the wear of the friction linings and/or brake discs or of the wheels (8) of the rail vehicle (1) being taken into account in the calculation of the currently available braking force of the braking components.

6. A method according to any one of the preceding claims, the operational readiness of one or more of the braking components being taken into account in the detection of the status parameters of the braking components of the rail vehicle (1) at a given moment in time.

7. A method according to any one of the preceding claims, the detection of status parameters of the braking components of the rail vehicle (1) at a given moment in time taking place continuously.

8. A method according to claim 7, the forwarding of the status parameters of the braking components of the rail vehicle (1) detected at a given moment in time to the calculation unit (12) of the assistance system (2) taking place continuously.

9. A method according to any one of the preceding claims, status parameters of further components of the rail vehicle (1) at a given moment in time being detected, compared with setpoint values and used to calculate a driving recommendation.

10. A method according to any one of the preceding claims, a comparison of the current speed of the rail vehicle (1) and a setpoint speed calculated prior to the start of travel and stored in the data memory (13) as a setpoint speed profile for the section of route currently being travelled being carried out following detection of the current position of the rail vehicle (1).

11. A method according to any one of the preceding claims, the data stored in the data memory (13) being updated via a data interface (4).

12. A method according to claim 11, the data interface (4) taking the form of a wireless communications interface via which the data stored in the data memory (13) of the calculation unit (12) is updated continuously or at predetermined time intervals.

13. An assistance system (2) for a rail vehicle (1), in particular for a driving assistance system of a multiple-unit train unit or a locomotive, having a data memory (13) for storing timetable information and route information for the route to be travelled, physical properties of the rail vehicle (1) and, where appropriate, any carriages coupled to it, a calculation unit (12) with which a driving recommendation is calculated, a connection to at least one measuring apparatus installed in the rail vehicle (1) for detecting current parameters of the rail vehicle (1) and, where appropriate, of any carriages coupled to it, **characterised in that** the calculation unit (12) is connected to at least one temperature-measuring apparatus (6) for detecting temperatures of the braking components at any given point in time, the calculation unit (12) being configured to carry out a method according to any one of the preceding claims 1 to 3 and 5 to 12.

14. A rail vehicle (1), in particular a multiple-train unit or locomotive, having a plurality of vehicle axles (7) with wheels (8), corresponding braking components and an assistance system (2), in particular a driver assistance system, for calculating a driving recommendation or controlling the rail vehicle (1), **characterised in that** the assistance system (2) is designed according to claim 13.

## Revendications

1. Procédé de calcul d'une recommandation de marche d'un véhicule (1) ferroviaire, notamment d'une rame automotrice ou d'une locomotive, comprenant un système (2) d'assistance embarqué sur le véhicule (1) ferroviaire et ayant une unité (12) de calcul et une mémoire (13) de données, dans laquelle sont mises en mémoire des informations d'acheminement et de voie de la voie à parcourir, des propriétés physiques du véhicule (1) ferroviaire et, le cas échéant, de voitures remorquées par celui-ci, comprenant les stades de procédé :
- on relève la position en cours du véhicule (1) ferroviaire,
- on relève la vitesse en cours du véhicule (1) ferroviaire,
**caractérisé par** les autres stades de procédé :
- on relève les paramètres d'état instantanés des composants de freinage du véhicule (1) ferroviaire,
- on compare les paramètres d'état des composants de freinage à des plages de consigne mises en mémoire dans la mémoire (13) de données des paramètres d'état des composants de freinage,
- on calcule la force de freinage disponible en cours des composants de freinage sur la base de la comparaison des paramètres d'état des composants de freinage,
- on met à jour la recommandation de marche pendant la marche, en tenant compte de la position et de la vitesse en cours du véhicule (1) ferroviaire et de la force de freinage des composants de freinage disponibles présentement obtenus par la comparaison des paramètres d'état des composants de freinage.

2. Procédé suivant la revendication 1, dans lequel on transmet la recommandation de marche mise à jour de l'unité (12) de calcul à l'unité (3) de commande du véhicule (1) ferroviaire.

3. Procédé suivant la revendication 1 ou 2, dans lequel, lors du relevé de paramètres d'état instantanés des composants de freinage du véhicule (1) ferroviaire, on mesure la température en cours des garnitures de friction et des disques de frein ou des roues (8) du véhicule (1) ferroviaire, où les garnitures de frein s'appliquent lors d'une opération de freinage.

4. Procédé suivant la revendication 1 ou 2, dans lequel, lors du relevé de paramètres d'état instantanés des composants de freinage du véhicule (1) ferroviaire, on détermine numériquement la température en cours des garnitures de frein et des disques de frein ou des roues (8) du véhicule (1) ferroviaire, où les garnitures s'appliquent lors d'une opération de freinage, à partir des propriétés physiques des composants de freinage, ainsi que de l'apport de chaleur de processus de freinage effectués auparavant.

5. Procédé suivant la revendication 3 ou 4, dans lequel, lors du calcul de la force de freinage disponible présentement des composants de freinage, on tient compte de la variation, en fonction de la température, de l'usure des garnitures de friction et/ou des disques de frein ou des roues (8) du véhicule (1) ferroviaire.

6. Procédé suivant l'une des revendications précédentes, dans lequel, lors du relevé de paramètres d'état instantanés des composants de freinage du véhicule (1) ferroviaire, on tient compte de l'aptitude à fonctionner d'un ou de plusieurs des composants de freinage.

7. Procédé suivant l'une des revendications précédentes, dans lequel le relevé de paramètres d'état instantanés des composants de freinage du véhicule (1) ferroviaire s'effectue en continu.

8. Procédé suivant la revendication 7, dans lequel l'acheminement des paramètres d'état instantanés relevés des composants de freinage du véhicule (1) ferroviaire à l'unité (12) de calcul du système (2) d'assistance s'effectue en continu.

9. Procédé suivant l'une des revendications précédentes, dans lequel on relève des paramètres d'état instantanés d'autres composants du véhicule (1) ferroviaire, on les compare à des valeurs de consigne et on en tire parti pour le calcul d'une recommandation de marche.

10. Procédé suivant l'une des revendications précédentes, dans lequel, après le relevé de la position en cours du véhicule (1) ferroviaire, on effectue une comparaison de la vitesse en cours du véhicule (1) ferroviaire à une vitesse de consigne calculée avant la mise en marche, qui est mise en mémoire en tant que profil de vitesse de consigne pour la section de voie parcourue présentement.

11. Procédé suivant l'une des revendications précédentes, dans lequel on met à jour, par l'intermédiaire d'une interface (4) de données, des données mises en mémoire dans la mémoire (13) de données.

12. Procédé suivant la revendication 11, dans lequel l'interface (4) de données est constituée sous la forme d'une interface de communication sans fil, par laquelle les données mises en mémoire en continu ou à des intervalles de temps déterminés à l'avance dans la mémoire (13) de données de l'unité (12) de calcul, sont mises à jour.

13. Système (2) d'assistance à la conduite d'un véhicule (1) ferroviaire, notamment système d'assistance au conducteur d'une rame automotrice ou d'une locomotive, comportant une mémoire (13) de données pour mettre en mémoire des informations horaires et de voie sur la voie à parcourir, des propriétés physiques du véhicule (1) ferroviaire et, le cas échéant, de voitures qui y sont remorquées, une unité (12) de calcul, par laquelle on calcule une recommandation de marche, une connexion à au moins un appareillage de mesure embarqué dans le véhicule (1) ferroviaire pour relever des paramètres en cours du véhicule (1) ferroviaire et, le cas échéant, de voitures qui y sont remorquées, **caractérisé en ce que** l'unité (12) de calcul est raccordée à au moins un équipement (6) de mesure de la température pour le relevé de température instantané des composants de freinage, l'unité (12) de calcul étant conçue pour effectuer un procédé suivant l'une des revendications 1 à 3 et 5 à 12 précédentes.

14. Véhicule (1) ferroviaire, notamment rame automotrice ou locomotive, ayant plusieurs essieux (7) de véhicule avec des roues (8) et, respectivement, des composants de freinage, ainsi qu'un système (2) d'assistance, notamment un système d'assistance à la conduite pour le calcul d'une recommandation de marche ou pour la commande du véhicule (1) ferroviaire, **caractérisé en ce que** le système (2) d'assistance est constitué suivant la revendication 13.
